# EUROPÄISCHE PATENTSCHRIFT

(11) **EP 3 146 199 B1**
(45) Veröffentlichungstag und Bekanntmachung des Hinweises auf die Patenterteilung: **30.01.2019**
(21) Anmeldenummer: 15723182.0
(22) Anmeldetag: 06.05.2015
(51) Int. Cl.: F03B 15/00, F03B 13/26

(54) **VERFAHREN ZUM BETRIEB EINES GEZEITENKRAFTWERKS**
METHOD FOR OPERATING A TIDAL POWER PLANT
PROCÉDÉ D'EXPLOITATION D'UNE CENTRALE D'ÉNERGIE MARÉMOTRICE

(30) Priorität: 21.05.2014 DE 102014209616
(43) Veröffentlichungstag der Anmeldung: 29.03.2017
(73) Patentinhaber: Voith Patent GmbH, 89522 Heidenheim (DE)
(72) Erfinder: SCHREPLER, Remus, 89522 Heidenheim (DE)
(86) Internationale Anmeldenummer: PCT/EP2015/059917
(87) Internationale Veröffentlichungsnummer: WO 2015/176956

(56) Entgegenhaltungen:
- GB-A- 2 417 759
- GB-A- 2 460 340
- GB-A- 2 505 415
- US-A1- 2012 321 466

## Beschreibung

Die vorliegende Erfindung betrifft den Betrieb eines bidirektionalen Gezeitenkraftwerkes.

Bidirektional betreibbare Gezeitenkraftwerke bestehen aus einem Damm, mit dem ein Meeresteil, wie z.B. eine Bucht, vom offenen Meer abgetrennt werden kann (siehe zum Beispiel US2012321466).

Dadurch entsteht ein vom Meer getrenntes Becken. Im Damm befinden sich ferner Schleusentore, über die die Verbindung zwischen dem Becken und dem offenen Meer hergestellt werden kann. Die Höhe des Wasserspiegels im offenen Meer variiert aufgrund des natürlichen Tidenhubes. Bei geöffneten Schleusentoren folgt der Wasserstand im Becken mit einer kleinen Verzögerung dem Wasserstand im offenen Meer. Dabei muss bei Ebbe Wasser aus dem Becken ins offene Meer abfließen und bei Flut fließt Wasser vom offenen Meer in das Becken. Ferner befinden sich im Damm Turbinen, die von Wasser zum Zweck der Energiegewinnung durchströmt werden. Werden die Schleusentore geschlossen, so erfolgt der Wasserfluss über die Turbinen. Dabei wird mit Hilfe von Generatoren, die an die Turbinen gekoppelt sind, elektrische Energie erzeugt. Die Turbinen können für ein bidirektionales Durchströmen geeignet sein, so dass sowohl das Einfließen in das Becken als auch das Ausfließen aus dem Becken über dieselben Turbinen erfolgt. Es ist jedoch ebenfalls möglich, dass eine Anzahl von Turbinen nur für das Einfließen in das Becken, und eine weitere Anzahl von Turbinen nur für das Ausfließen benutzt wird. Ferner ist bekannt, dass eine effektive Erzeugung von elektrischer Energie über die genannten Turbinen eine gewisse minimale Differenz der Wasserstände im Becken und im offenen Meer erfordert. Diese Differenz kann beispielsweise erzielt werden, wenn der Wasserfluss zwischen Becken und offenen Meer über eine gewisse Zeit unterbrochen wird. In dieser Zeit bleibt der Wasserstand im Becken konstant, während der Wasserstand im Meer mit der natürlichen Tide variiert. Dazu müssen die Turbinen über geeignete Absperrorgane verfügen. Weiterhin ist bekannt, dass die genannte Differenz auch durch Pumpen von Wasser vom offenen Meer in das Becken oder durch Pumpen von Wasser aus dem Becken ins offene Meer erzielt oder beeinflusst werden kann. Dazu können separate Pumpen vorgesehen sein, oder es werden die Turbinen als Pumpen eingesetzt. Beim Pumpen wird elektrische Energie aus dem Stromnetz aufgenommen und in Lageenergie des Wassers umgewandelt. Ein Teil dieser aufgenommenen Energie, wird im Turbinenbetrieb zurückgewonnen. Es entsteht dabei ein Energieverlust, der durch den endlichen Wirkungsgrad der Pumpen und Turbinen verursacht wird. Man kann jedoch zeigen, dass trotz dieses Energieverlustes die Gesamtmenge an erzeugter elektrischer Energie eines Gezeitenkraftwerkes durch zeitweises Pumpen erhöht werden kann. Das liegt daran, dass durch das Pumpen die Differenz der Wasserstände erhöht werden kann, und so sowohl die Effizienz im Turbinenbetrieb als auch das Zeitintervall in dem dieser Betriebsmodus sinnvoll ist vergrößert wird.

Die aus dem Stand der Technik bekannte typische Betriebsweise von bidirektionalen Gezeitenkraftwerken beinhaltet folgende Betriebssequenzen während einem kompletten Tidenzyklus (z.B. Flut - Ebbe - Flut, wobei der Startpunkt der folgenden Sequenz dadurch gekennzeichnet ist, dass der Wasserstand im Becken gleich hoch wie der Wasserstand im offenen Meer ist unweit von der Flut):
- V1:: Alle Absperrorgane sind geschlossen
- V2:: Pumpen in Richtung A um die Differenz der Wasserstände weiter zu erhöhen
- V3:: Alle Absperrorgane sind geschlossen
- V4:: Turbinenbetrieb in Richtung B
- V5:: Turbinenabsperrorgane sind geschlossen und Schleusen sind offen
- V6:: Alle Absperrorgane sind geschlossen
- V7:: Pumpen in Richtung B um die Differenz der Wasserstände weiter zu erhöhen
- V8:: Alle Absperrorgane sind geschlossen
- V9:: Turbinenbetrieb in Richtung A
- V10:: Turbinenabsperrorgane sind geschlossen und Schleusen sind offen

Die in den Schritten V2, V4, V7 und V9 erwähnte Richtung A bzw. Richtung B bezieht sich dabei auf die jeweilige Fließrichtung des Wassers. Richtung A bedeutet im genannten Beispiel, dass Wasser vom offenen Meer ins Becken fließt, und Richtung B bezeichnet die umgekehrte Fließrichtung. Begänne der Zyklus bei Ebbe, so wären die Fließrichtungen genau umgekehrt. Es ergibt sich so folgender Ablauf anhand dem genannten Beispiel (Flut - Ebbe - Flut) in näherer Erläuterung: In Schritt V1 sind alle Absperrorgane geschlossen. Damit bleibt der Wasserstand im Becken konstant. Im offenen Meer senkt sich in dieser Zeit der Wasserspielgel (Rückgang der Flut). In Schritt V2 wird Wasser vom offenen Meer ins Becken gepumpt, wobei der Wasserstand im Becken steigt und der Wasserstand im offenen Meer weiter fällt (weiterhin Rückgang der Flut). In Schritt V3 werden wieder alle Absperrorgane geschlossen. Der Wasserstand im Becken bleibt konstant, im offenen Meer senkt sich der Wasserspiegel weiter (weiterhin Rückgang der Flut). In V4 werden die Absperrorgane der Turbinen geöffnet und Wasser strömt durch die Turbinen aus dem Becken ins offene Meer. Es wird elektrische Energie erzeugt. Der Wasserspiegel im Becken senkt sich. Im offenen Meer senkt sich zunächst der Wasserspiegel weiterhin bis die Ebbe erreicht ist. Nach Erreichen der Ebbe steigt der Wasserspiegel im offenen Meer wieder. Die Wasserstände im Becken und im offenen Meer nähern sich wieder an, bis die Differenz zu klein für einen effizienten Turbinenbetrieb wird. In V5 werden die Absperrorgane der Turbinen geschlossen und die Schleusen geöffnet. Dieser Schritt dient dazu den Wasserstand im Becken an den Wasserstand im offenen Meer anzugleichen. Aufgrund der geringen Höhendifferenz zwischen den beiden Wasserständen ist ein Turbinenbetrieb nicht effizient. Am Ende von V5 sind beide Wasserstände gleich. In V6 werden alle Absperrorgane geschlossen, so dass der Wasserstand im Becken konstant bleibt. Im offenen Meer steigt nun der Wasserstand weiter an (Rückkehr der Flut). In V7 wird Wasser aus dem Becken ins offene Meer gepumpt, um den Wasserstand im Becken weiter zu erniedrigen. In V8 werden wieder alle Absperrorgane geschlossen. Der Wasserstand im Becken bleibt konstant, im offenen Meer hebt sich der Wasserspiegel weiter (weiterhin Rückkehr der Flut). In V9 werden die Absperrorgane der Turbinen geöffnet und Wasser strömt durch die Turbinen aus dem offenen Meer ins Becken. Es wird elektrische Energie erzeugt. Der Wasserspiegel im Becken steigt. Im offenen Meer steigt der Wasserspiegel zunächst weiterhin bis die Flut maximal ist. Danach sinkt der Wasserspiegel im offenen Meer wieder. Die Wasserstände im Becken und im offenen Meer nähern sich wieder an, bis die Differenz zu klein für einen effizienten Turbinenbetrieb wird. In V10 werden die Absperrorgane der Turbinen geschlossen und die Schleusen geöffnet. Dieser Schritt dient dazu den Wasserstand im Becken an den Wasserstand im offenen Meer anzugleichen. Aufgrund der geringen Höhendifferenz zwischen den beiden Wasserständen ist ein Turbinenbetrieb nicht effizient. Am Ende von V10 sind beide Wasserstände gleich und der Zyklus beginnt wieder von vorn.

Es ist noch zu erwähnen, dass während dem Pumpen die zu den Pumpen gehörenden Absperrorgane geöffnet werden. Nach Beendigung des Pumpvorgangs werden diese Absperrorgane geschlossen. Falls die Turbinen als Pumpen betrieben werden, sind dies natürlich die zu den Turbinen gehörigen Absperrorgane. Alle anderen Absperrorgane sind während dem Pumpen geschlossen. Die analoge Aussage gilt natürlich auch für den Turbinenbetrieb. Die Schleusen gelten als Absperrorgane (so in V1, V3, V6 und V8).

Ferner unterliegt die jeweilige Zeitdauer der einzelnen Verfahrensschritte, d.h. der jeweilige Anfangs- und Endzeitpunkt, einem Optimierungsverfahren. Bei vorausgesetzten Tidenhüben und bekannten Kenngrößen (wie z.B. Turbinen- und Pumpeneffizienz in Abhängigkeit von der Differenz der Wasserstände) werden die Zeiten für die einzelnen Verfahrensschritte mit einem geeigneten Optimierungsverfahren bestimmt. Die zu optimierende Größe ist eine Energieausbeute.

Alle bisherigen Ausführungen beziehen sich auf den allgemein bekannten Stand der Technik.

Der Erfinder hat sich die Aufgabe gestellt, ein Verfahren zum Betreiben eines bidirektionalen Gezeitenkraftwerks zu entwickeln, das die Energieausbeute des Kraftwerks gegenüber dem bekannten Verfahren erhöht, ohne die Gestehungskosten eines solchen Kraftwerks zu erhöhen. Als Energieausbeute wird dabei die Netto-Energiemenge verstanden, die über einen längeren Zeitraum vom Kraftwerk erzeugt wird. Der so verstandene Zeitraum sollte wenigstens 5 Tidenzyklen umfassen. Die Energieausbeute errechnet sich dabei aus der ins Netz eingespeisten Energiemenge abzüglich der beim Pumpen aufgenommen Energiemenge.

Der Erfinder hat erkannt, dass die gestellte Aufgabe durch ein Verfahren mit den kennzeichnenden Merkmalen des Anspruchs 1 gelöst werden kann. Weitere vorteilhafte Ausführungsformen des erfinderischen Verfahrens werden in den hiervon abhängigen Ansprüchen beschrieben.

Der Erfinder hat erkannt, dass die gestellte Aufgabe durch ein Verfahren gelöst wird, das gegenüber dem bekannten Verfahren abweichende Verfahrensschritte umfasst. Das erfindungsgemäße Verfahren umfasst folgende Verfahrensschritte:
- V1:: Alle Absperrorgane sind geschlossen
- V2:: Pumpen in Richtung A um die Differenz der Wasserstände weiter zu erhöhen
- V3:: Alle Absperrorgane sind geschlossen
- V4:: Turbinenbetrieb in Richtung B
- V5b:: Turbinenabsperrorgane und Schleusen sind offen
- V6:: Alle Absperrorgane sind geschlossen
- V7:: Pumpen in Richtung B um die Differenz der Wasserstände weiter zu erhöhen
- V8:: Alle Absperrorgane sind geschlossen
- V9:: Turbinenbetrieb in Richtung A
- V10b:: Turbinenabsperrorgane und Schleusen sind offen

Gegenüber dem bekannten Verfahren werden erfindungsgemäß die Verfahrensschritte V5 und V10 durch die neuen Verfahrensschritte V5b und V10b ersetzt. In V5b und V10b sind jetzt sowohl die Turbinenabsperrorgane als auch die Schleusen geöffnet. Dies führt dazu, dass sich der Wasserstand im Becken schneller dem Wasserstand im offenen Meer angleicht, da der Querschnitt für die jeweilige Strömung gegenüber dem bekannten Verfahren vergrößert ist. Es muss jedoch betont werden, dass sich aus dieser Überlegung noch nicht ableiten lässt, dass das erfindungsgemäße Verfahren eine höhere Energieausbeute verglichen mit dem bekannten Verfahren ermöglicht. Das kann erst durch das erwähnte Optimierungsverfahren per Simulation erwiesen werden. Der Erfinder hat mit identischen Eingangsgrößen (Tidenhöhen und Effizienzwerten) beide Verfahren optimiert und die jeweilige Energieausbeute berechnet. Es hat sich gezeigt, dass das erfindungsgemäße Verfahren eine etwa 1.5 bis 2.3% höhere Energieausbeute ermöglicht. Die Optimierungsrechnungen ergeben dabei auch unterschiedliche Anfangs- und Endzeitpunkte der jeweiligen Verfahrensschritte, d.h. die beiden Verfahren unterscheiden sich in der Ausführung nicht nur darin, dass in den Schritten V5b und V10b noch zusätzlich die Turbinenabsperrorgane geöffnet werden, sondern auch in den Anfangs- und Endzeitpunkten aller Verfahrensschritte über sämtliche simulierte Tidenzyklen hinweg. Und es gibt dabei durchaus auch zeitliche Phasen, in denen das erfindungsgemäße Verfahren weniger Energie liefert verglichen mit den zeitlich identischen Phasen des bekannten Verfahrens. Allerdings liefert das erfindungsgemäße Verfahren in Summe die erwähnte höhere Ausbeute. Das erfindungsgemäße Verfahren erfordert keinerlei bauliche Maßnahmen und löst daher die gestellt Aufgabe.

Weitere vorteilhafte Ausführungsformen ergeben sich aufgrund den beiden Möglichen Betriebszuständen, in denen sich die Turbinen bei geöffneten Turbinenabsperrorganen befinden können. Erstens können die Turbinen zur Energieerzeugung benützt werden. Dieser Betriebszustand wird mit Turbinenbetrieb bezeichnet. Zweitens können die Turbinen "Ieer" laufen, d. h. es wird keine Energie entnommen (z.B. indem der angeschlossene Generator vom Netz genommen wird). Dieser Betriebszustand wird mit Schwallbetrieb bezeichnet. Es ergeben sich hieraus für die Schritte V5b und V10b der erfindungsgemäßen Verfahrens folgende Möglichkeiten: Die Turbinen befinden sich im Turbinenbetrieb oder die Turbinen befinden sich im Schwallbetrieb. Im ersten Fall wird in den jeweiligen Verfahrensschritten Energie erzeugt (wenn auch z.T. mit geringer Effizienz). Allerdings dauern dann die entsprechenden Schritte länger, als wenn die Turbinen auf Schwallbetrieb umgestellt werden, wie im zweiten Fall. Die Simulation zeigt, dass beide Fälle eine erfindungsgemäß höhere Energieausbeute verglichen mit dem aus dem Stand der Technik bekannten Verfahren liefern. Als besonders vorteilhaft hat sich eine Kombination der beiden Fälle erwiesen. Hierzu werden die Verfahrensschritte V5b und V10b jeweils in zwei separate Verfahrensschritte V5b1 bzw. V10b1 und V5b2 bzw. V10b2 unterteilt, wobei sich in den Schritten V5b1 und V10b1 die Turbinen im Turbinenbetrieb und in den Schritten V5b2 und V10b2 die Turbinen im Schwallbetrieb befinden. Die Simulation ergab hierfür eine Erhöhung der Energieausbeute um etwa 2.3% verglichen mit dem aus dem Stand der Technik bekannten Verfahren.

Abschließend sei noch erwähnt, dass in den Schritten V5b, V5b2, V10b und V10b2 am Ende der Schritte jeweils zuerst die Absperrorgane der Turbinen und dann erst nach einer der Optimierung unterliegenden Zeitspanne die Schleusen geschlossen werden können.

## Patentansprüche

1. Verfahren zum Betrieb eines bidirektionalen Gezeitenkraftwerkes, wobei das Gezeitenkraftwerk folgende Merkmale aufweist: einen Damm der einen Meeresteil vom offen Meer abtrennt und so ein Becken einschließt, wenigstens eine Turbine, welche sich im Damm befindet und von Wasser zum Zweck der Energiegewinnung durchströmt werden kann und über Absperrorgane verfügt, wenigstens eine Schleuse, welche sich im Damm befindet und über welche eine Verbindung zwischen dem Becken und dem offen Meer hergestellt werden kann, wenigstens eine Pumpe zum Pumpen von Wasser vom offenen Meer in das Becken oder zum Pumpen von Wasser aus dem Becken ins offene Meer mit Absperrorganen oder die Möglichkeit wenigstens eine Turbine als Pumpe zu betreiben. Das Verfahren umfasst folgende Verfahrensschritte in der genannte Reihenfolge, die zyklisch beginnend bei Ebbe oder Flut wiederholt werden: Alle Absperrorgane und die Schleuse sind geschlossen (V1); Pumpen in Richtung A bei geschlossener Schleuse und geöffneten Absperrorganen der Pumpe, wobei alle anderen Absperrorgane geschlossen sind (V2); alle Absperrorgane und die Schleuse sind geschlossen (V3); Turbinenbetrieb in Richtung B bei geschlossener Schleuse und geöffneten Absperrorganen der Turbine, wobei alle anderen Absperrorgane geschlossen sind (V4); die Schleuse ist offen (V5b); alle Absperrorgane und die Schleuse sind geschlossen (V6); Pumpen in Richtung B bei geschlossener Schleuse und geöffneten Absperrorganen der Pumpe, wobei alle anderen Absperrorgane geschlossen sind (V7); alle Absperrorgane und die Schleuse sind geschlossen (V8); Turbinenbetrieb in Richtung A bei geschlossener Schleuse und geöffneten Absperrorganen der Pumpe, wobei alle anderen Absperrorgane geschlossen sind (V9); die Schleuse ist offen (V10b); wobei Richtung A eine Fließrichtung des Wassers zwischen Becken und offenem Meer bezeichnet und Richtung B die umgekehrte Fließrichtung bezeichnet, und wobei die zeitliche Dauer der einzelnen Verfahrensschritte mit Hilfe eines Optimierungsverfahren festgelegt wird, **dadurch gekennzeichnet, dass** in den Schritten V5b und V10b die Absperrorgane der wenigstens einen Turbine geöffnet sind.

2. Verfahren zum Betrieb eines bidirektionalen Gezeitenkraftwerkes nach Anspruch 1, **dadurch gekennzeichnet, dass** sich in den Schritten V5b und V10b die wenigstens eine Turbine im Turbinenbetrieb befindet.

3. Verfahren zum Betrieb eines bidirektionalen Gezeitenkraftwerkes nach Anspruch 1, **dadurch gekennzeichnet, dass** sich in den Schritten V5b und V10b die wenigstens eine Turbine im Schwallbetrieb befindet.

4. Verfahren zum Betrieb eines bidirektionalen Gezeitenkraftwerkes nach Anspruch 1, **dadurch gekennzeichnet, dass** die Schritte V5b und V10b in die separaten Verfahrensschritte V5b1 bzw. V10b1 und V5b2 bzw. V10b2 unterteilt sind, wobei sich in den Schritten V5b1 und V10b1 die wenigstens eine Turbine im Turbinenbetrieb befindet, und sich in den Schritten V5b2 und V10b2 die wenigstens eine Turbine im Schwallbetrieb befindet.

## Claims

1. A method of operating a bidirectional tidal power plant, the tidal power plant comprising: a dam separating a sea portion from the open sea to include a pool, at least one turbine located in the dam and permeable by water for power generation purposes and having shut-off valves, at least one lock located in the dam and through which a connection between the tank and the open sea can be made, at least one pump for pumping water from the open sea into the tank or for pumping water out of it Basin into the open sea with shut-off devices or the possibility to operate at least one turbine as a pump. The process comprises the following process steps in the order named, which are repeated cyclically beginning at low tide or high tide: all shut-off devices and the lock are closed (V1); Pumps in direction A with closed lock and open shut-off devices of the pump, with all other shut-off devices closed (V2); all shut-off devices and the lock are closed (V3); Turbine operation in direction B with closed lock and open shut-off valves of the turbine, with all other shut-off valves are closed (V4); the lock is open (V5b); all shut-off devices and the lock are closed (V6); Pumps in direction B with the lock closed and the pump shut-off valves open, with all other shut-off devices closed (V7); all shut-off devices and the lock are closed (V8); Turbine operation in direction A with closed lock and open shut-off valves of the pump with all other shut-off devices closed (V9); the lock is open (V10b); wherein direction A denotes a flow direction of the water between the basin and the open sea and direction B denotes the reverse flow direction, and wherein the time duration of the individual method steps is determined by means of an optimization method, **characterized in that** in steps V5b and V10b, the shut-off of at least a turbine are open.

2. A method for operating a bidirectional tidal power plant according to claim 1, **characterized in that** in the steps V5b and V10b, the at least one turbine is in turbine mode.

3. A method for operating a bidirectional tidal power plant according to claim 1, **characterized in that** in steps V5b and V10b, the at least one turbine is in surge mode.

4. A method for operating a bidirectional tidal power plant according to claim 1, **characterized in that** the steps V5b and V10b are subdivided into the separate process steps V5b1 or V10b1 and V5b2 or V10b2, wherein in steps V5b1 and V10b1 the at least one turbine in the Turbine operation is located, and in steps V5b2 and V10b2, the at least one turbine is in surge mode.

## Revendications

1. Procédé d'exploitation d'une centrale marémotrice bidirectionnelle, la centrale marémotrice comprenant: un barrage séparant une partie de la mer de la mer ouverte pour inclure un bassin, au moins une turbine située dans le barrage et perméable à l'eau pour des besoins de production d'énergie et ayant des vannes d'arrêt, au moins une écluse située dans le barrage et à travers laquelle peut être établie une connexion entre le réservoir et la mer ouverte, au moins une pompe pour pomper de l'eau du large dans le réservoir ou pour l'évacuer Bassin en mer ouverte avec dispositifs d'arrêt ou possibilité de faire fonctionner au moins une turbine en pompe. Le processus comprend les étapes de processus suivantes dans l'ordre indiqué, qui sont répétées cycliquement à partir de la marée basse ou de la marée haute: tous les dispositifs d'arrêt et la serrure sont fermés (V1); Pompes dans le sens A avec verrouillage fermé et dispositifs d'arrêt ouverts de la pompe, tous les autres dispositifs d'arrêt étant fermés (V2); tous les dispositifs d'arrêt et la serrure sont fermés (V3); Fonctionnement de la turbine dans le sens B avec verrouillage fermé et vannes d'arrêt ouvertes de la turbine, toutes les autres vannes d'arrêt étant fermées (V4); la serrure est ouverte (V5b); tous les dispositifs d'arrêt et la serrure sont fermés (V6); Pompes dans le sens B avec la serrure fermée et les vannes d'arrêt de pompe ouvertes, tous les autres dispositifs d'arrêt fermés (V7); tous les dispositifs d'arrêt et la serrure sont fermés (V8); Fonctionnement de la turbine dans le sens A avec verrouillage fermé et vannes d'arrêt ouvertes de la pompe avec tous les autres dispositifs d'arrêt fermés (V9); la serrure est ouverte (V10b); dans lequel la direction A désigné une direction d'écoulement de l'eau entre le bassin et la mer ouverte et la direction B indique la direction inverse de l'écoulement, et dans lequel la durée des différentes étapes du procédé est déterminée au moyen d'un procédé d'optimisation, **caractérisé en ce que** dans les étapes V5b et V10b, la fermeture d'au moins une turbine sont ouverts.

2. Procédé d'exploitation d'une centrale marémotrice bidirectionnelle selon la revendication 1, **caractérisé en ce que** dans les étapes V5b et V10b, la au moins une turbine est en mode turbine.

3. Procédé de fonctionnement d'une centrale marémotrice bidirectionnelle selon la revendication 1, **caractérisé en ce que**, aux étapes V5b et V10b, la au moins une turbine est en mode de surtension.

4. Procédé d'exploitation d'une centrale marémotrice bidirectionnelle selon la revendication 1, **caractérisé en ce que** les étapes V5b et V10b sont subdivisées en étapes de processus séparées V5b1 ou V10b1 et V5b2 ou V10b2, dans lesquelles aux étapes V5b1 et V10b1 Le fonctionnement de la turbine est localisé et, aux étapes V5b2 et V10b2, la au moins une turbine est en mode de surtension.
